# EUROPÄISCHE PATENTSCHRIFT

(11) **EP 3 426 485 B1**
(45) Veröffentlichungstag und Bekanntmachung des Hinweises auf die Patenterteilung: **03.04.2024**
(21) Anmeldenummer: 17710502.0
(22) Anmeldetag: 06.03.2017
(51) Int. Cl.: B32B 17/06, B32B 17/10, B60Q 1/26, B60Q 3/10, F21V 8/00, F21V 33/00, F21S 43/237, G02B 6/00, F21W 102/40

(54) **BELEUCHTBARE VERBUNDSCHEIBE**
LAMINATED GLAZING WHICH CAN BE ILLUMINATED
VITRAGE FEUILLETÉ POUVANT ETRE ECLAIREE

(30) Priorität: 09.03.2016 EP 16159456; 09.03.2016 EP 16159469
(43) Veröffentlichungstag der Anmeldung: 16.01.2019
(73) Patentinhaber: SAINT-GOBAIN GLASS FRANCE, 92400 Courbevoie (FR)
(72) Erfinder: KLEIN, Marcel, 52499 Baesweiler (DE); DÖRNER, Dirk, 79312 Emmendingen (DE)
(74) Vertreter: Hermanns, Ellen
(86) Internationale Anmeldenummer: PCT/EP2017/055180
(87) Internationale Veröffentlichungsnummer: WO 2017/153330

(56) Entgegenhaltungen:
- EP-A1- 2 025 510
- WO-A1-2007/077099
- WO-A1-2008/061789
- DE-A1-102005 036 869
- US-A1- 2013 299 856
- US-A1- 2015 253 486

## Beschreibung

Die Erfindung betrifft eine beleuchtbare Verbundscheibe, insbesondere ein Windschutzscheibe, eine Heckscheibe, eine Seitenscheibe oder eine Dachscheibe eines Fahrzeugs, sowie ein Verfahren zu deren Herstellung und deren Verwendung.

Verbundscheiben bestehen aus mindestens einer Außenscheibe, einer Innenscheibe und einer klebefähigen Zwischenschicht, die die Außenscheibe mit der Innenscheibe flächig verbindet. Typische Zwischenschichten sind dabei Polyvinylbutyralfolien, die neben ihren Klebeeigenschaften eine hohe Zähigkeit und eine hohe akustische Dämpfung aufweisen. Die Zwischenschicht verhindert den Zerfall der Verbundglasscheibe bei einer Beschädigung. Die Verbundscheibe bekommt lediglich Sprünge, bleibt aber formstabil.

Verbundscheiben haben gegenüber Einscheibensicherheitsgläsern deutliche Vorteile: So kann durch eine Verbundscheibe eine hohe akustische Isolation erzielt werden, was beispielsweise zur Abtrennung von Fahrzeuginnenräumen von ihrer äußeren Umgebung besonders vorteilhaft ist. Deshalb werden neben Windschutzscheiben auch zunehmend Seitenscheiben von Kraftfahrzeugen aus Verbundglas gefertigt. Gleichzeitig weist eine Verbundscheibe eine höhere Durchbruchshemmung als ein Einscheibensicherheitsglas auf und ist somit stabiler gegenüber einem Eindringen von Fremdkörpern oder Einbruchsversuchen.

DE 10 2005 036869 A1, WO 2008/061789 A1, WO 2007/077099 A1, US 2015/253486 A1 und US 2013/299856 A1 offenbaren Verbundstrukturen, die durch Glasfasergewebe oder Glasfaservliese flächig beleuchtbar sind.

Der vorliegenden Erfindung liegt die Aufgabe zugrunde, eine verbesserte Verbundscheibe bereitzustellen, die zumindest abschnittsweise beleuchtbar ist. Die Beleuchtung soll einfach und kostengünstig in die Verbundscheibe integrierbar sein.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe ist im Anspruch 1 definiert und umfasst mindestens:
- eine Außenscheibe und eine Innenscheibe, welche über eine Zwischenschicht miteinander verbunden sind, und
- mindestens eine lichtstreuende Glasfaser, die geeignet ist Licht durch Streuung über ihre Seitenwand entlang ihrer Erstreckungslänge auszusenden,
wobei die Glasfaser zumindest abschnittsweise zwischen der Zwischenschicht und der Außenscheibe und/oder zwischen der Zwischenschicht und der Innenscheibe angeordnet ist.

In einer vorteilhaften Ausgestaltung ist die erfindungsgemäße Verbundscheibe eine Verglasung für Fortbewegungsmittel für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

In einer besonders vorteilhaften Ausgestaltung ist die erfindungsgemäße Verbundscheibe eine laminierte Seitenscheibe, die für ein, bevorzugt zu öffnendes, Seitenfenster eines Fahrzeugs vorgesehen ist. Unter einem zu öffnenden Seitenfenster wird ein Seitenfenster verstanden, welches sich durch im Wesentlichen vertikale Verschiebung der Seitenscheibe in die Karosserietür hinein öffnen und wieder schließen lässt.

Die Begriffe Außenscheibe und Innenscheibe dienen lediglich zur Unterscheidung einer ersten Scheibe und einer zweiten Scheibe. Im Falle einer Verwendung der Verbundscheibe als Fahrzeugscheibe oder als Gebäudescheibe ist die Außenscheibe bevorzugt aber nicht notwendigerweise dem Außenraum der Verbundscheibe zugewandt und die Innenscheibe dem Innenraum.

Die erfindungsgemäße Glasfaser ist eine lichtstreuende Glasfaser, die durch Streuung Licht über ihre Seitenwand entlang ihrer Erstreckungslänge aussendet. Derartige Glasfasern bestehen aus mindestens einem Glasfaserkern, der durch eine oder mehrere mantelförmig um den Glasfaserkern angeordneten Schichten umgeben ist. Die Mantelschichten weisen dabei eine Vielzahl von Streuzentren auf in Form von Nanoporen oder Nanopartikel. Geeignete lichtstreuende Glasfasern sind dem Fachmann wohlbekannt. Nur beispielsweise sei hier auf die in der US 2011/0122646 A1 oder US 2015/0131955 A1 genannten Glasfasern verwiesen. Die Dicke der Glasfaser beträgt typischerweise von 5 µm bis 300 µm, bevorzugt von 100 µm bis 250 µm. Es versteht sich, dass die Glasfaser durch eine geeignete Herstellung oder Bearbeitung auch nur über abschnittsweise lichtstreuende Bereiche verfügen kann.

In einer vorteilhaften Ausgestaltung der erfindungsgemäßen Glasfaser beträgt die Erstreckungslänge, über die die Glasfaser ununterbrochen Licht über ihre Seitenwand aussendet, mindestens 5 cm, bevorzugt mindestens 10 cm und besonders bevorzugt mindestens 30 cm.

Unter dem Begriff lichtstreuende Glasfaser sei im Rahmen der vorliegenden Erfindung auch ein Bündel oder Geflecht mehrerer einzelner Glasfasern zu verstehen. In einer vorteilhaften Ausgestaltung weist die erfindungsgemäße Verbundscheibe weniger oder gleich 50 einzelne Glasfasern auf, bevorzugt genau eine Glasfaser, genau zwei Glasfasern, genau drei Glasfasern, genau vier Glasfasern, genau fünf Glasfasern, genau sechs Glasfasern, genau sieben Glasfasern, genau acht Glasfasern, genau neun Glasfasern oder genau zehn Glasfasern. Insbesondere weist die erfindungsgemäße Verbundscheibe kein Glasfaservlies auf. Die ein bis 50 Glasfasern sind bevorzugt unabhängig voneinander ansteuerbar, das heißt unabhängig voneinander beleuchtbar. Die ein bis 50 Glasfasern sind bevorzugt nebeneinander angeordnet. Alternative können sich die Glasfasern überkreuzen, bevorzugt maximal zehn Mal pro Glasfaser.

In einer vorteilhaften Ausgestaltung der erfindungsgemäßen Verbundscheibe ist die Glasfaser in eine Oberfläche der Zwischenschicht eingebettet ist. Dies kann während der Lamination von Außenscheibe, Zwischenschicht und Innenscheibe automatisch erfolgen, da Außenscheibe und Innenscheibe bei dem Temperaturen und Drücken der Lamination im Wesentlichen starr sind und die Zwischenschicht weich und nachgiebig.

Zur einfacheren Herstellung der Verbundscheibe, kann die Glasfaser vor der Lamination unter Einwirkung von Druck und Temperatur in einer Oberfläche der Zwischenschicht fixiert werden. Dies hat den besonderen Vorteil, dass die Glasfaser während der Herstellung der Verbundscheibe in ihrem Ort fixiert ist und ein Verrutschen vermieden wird. Die Einwirkung von Druck und Temperatur kann bevorzugt durch ein Heizelement, bevorzugt einen Lötkolben, eine beheizte Anpresswalze, eine Wärmeplatte, insbesondere ein Bügeleisen, oder einen Heißluftstrom in Kombination mit einem Anpressmittel erzeugt werden.

In einer vorteilhaften Ausgestaltung einer erfindungsgemäßen Verbundscheibe ist die Glasfaser durch mindestens ein Befestigungsmittel mit der Zwischenschicht, der Außenscheibe und/oder der Innenscheibe verbunden. Dies hat den besonderen Vorteil, dass die Glasfaser während der Herstellung der Verbundscheibe in ihrem Ort fixiert ist und ein Verrutschen vermieden wird. Die Befestigungsmittel sind bevorzugt transparent, so dass die Durchsicht durch die Verbundscheibe nicht oder nicht wesentlich beeinträchtigt wird.

In einer besonders vorteilhaften Ausgestaltung einer erfindungsgemäßen Verbundscheibe ist das Befestigungsmittel ein Klebemittel, bevorzugt ein bei Auftragung flüssiger Klebstoff, ein einseitig klebendes Klebeband (kurz: einseitiges Klebeband) oder ein doppelseitig klebendes Klebeband (kurz: doppelseitiges Klebeband). Das einseitige Klebeband beziehungsweise das doppelseitige Klebeband bestehen aus einen Trägerfilm, bevorzugt einem Trägerfilm aus Kunststoff, der einseitig beziehungsweise doppelseitig einen Klebstoff aufweist.

Besonders vorteilhafte Klebstoffe sind Acrylatklebstoffe, Methylmethacrylatklebstoffe, Cyanacrylatklebstoffe, Polyepoxide, Silikonklebstoffe und/oder Silanvernetzende-Polymerklebstoffe, Gemische und/oder Copolymere davon.

In einer alternativen vorteilhaften Ausgestaltung ist das Befestigungsmittel eine monofile Schnur oder eine geflochtene Schnur, bevorzugt eine transparente Schnur, besonders bevorzugt eine Kunststoffschnur und insbesondere eine Schnur aus Polyamid (beispielsweise Nylon), Polyethylen (beispielsweise Dyneema oder Spectra) oder Polyaramid (beispielsweise Kevlar). Derartige Schnüre haben typische Durchmesser von 0,01 mm bis 2 mm, bevorzugt von 0,02 mm bis 0,1 mm.

Die Außenscheibe und/oder die Innenscheibe enthalten bevorzugt Glas, insbesondere Kalk-Natron-Glas, oder Kunststoffe, vorzugsweise starre Kunststoffe, insbesondere Polycarbonat oder Polymethylmethacrylat. Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen. Die Außenscheibe und/oder die Innenscheibe können auf einer ihrer Seiten einen Abdeckdruck, bevorzugt einen Schwarzdruck aufweisen, der beispielsweise die Durchsicht auf eine Einklebung der Scheibe in eine Einhausung oder Fahrzeugkarossiere oder andere in oder an der Scheibe angeordnete Elemente verdeckt. Der Abdeckdruck kann opak und vollflächig ausgebildet sein. Alternativ kann der Abdeckdruck auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung.

In einer vorteilhaften Ausgestaltungsform weist die erfindungsgemäße Verbundscheibe zumindest abschnittsweise auf der Außenscheibe oder auf der Innenscheibe einen Abdeckdruck und insbesondere einen Schwarzdruck auf, wobei die Glasfaser zumindest abschnittweise im Bereich des Abdeckdrucks angeordnet ist. Bei einem opaken Abdeckdruck hat dies den besonderen Vorteil, dass die Glasfaser und eventuelle Befestigungsmittel in der Durchsicht nicht zu erkennen sind und gleichzeitig die Beleuchtung durch eine Glasfaser nur auf einer Oberfläche der Scheiben, das heißt auf der außenseitigen Oberfläche der Außenscheibe oder der innenseitigen Oberfläche der Innenscheibe, zu erkennen ist.

Die Zwischenschicht ist bevorzugt eine thermoplastische Zwischenschicht und wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon. Derartige Folien haften gut auf Glas- oder Kunststoffscheiben. Die Zwischenschicht kann auch eine nicht oder schlecht haftende Folie enthalten, beispielsweise eine Polyethylenterephthalat (PET)-Folie, die zwischen zwei gut haftenden, thermoplastischen Verbindungsfolien einlaminiert wird. Die Dicke der Zwischenschicht und insbesondere der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

In einer weiteren vorteilhaften Ausgestaltung weist die erfindungsgemäße Verbundscheibe Heizmittel zur elektrischen Beheizung der Verbundscheibe auf. Bevorzugte Heizmittel sind dabei elektrisch leitfähige Drähte und/oder eine oder mehrere elektrisch beheizbare, transparente, elektrisch leitfähige Schicht.

Die erfindungsgemäße Verbundscheibe kann neben der durch die Heizmittel bewirkten Heizfunktion weitere Funktionalitäten aufweisen. In einer vorteilhaften Ausgestaltung weist die Verbundscheibe eine reflektierende Beschichtung für den Infrarotbereich auf. Eine solche Beschichtung kann auf eine Oberfläche der Außenscheibe oder auf eine Oberfläche der Innenscheibe aufgebracht sein, bevorzugt auf einer zur Zwischenschicht hingewandten Oberfläche, um die Beschichtung vor Korrosion und mechanischer Einwirkung zu schützen. Alternativ kann die Beschichtung in Form einer beschichteten Trägerfolie, beispielsweise aus Polyethylenterephthalat (PET), in den Verbund eingebracht sein. In diesem Fall ist die beschichtete Folie bevorzugt zwischen einer ersten und einer zweiten thermoplastischen Verbindungsfolie angeordnet. IR-reflektierende Beschichtungen weisen typischerweise zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Es versteht sich, dass diese elektrisch leitfähigen, transparenten Beschichtungen auch zur elektrischen Beheizung der Scheibe dienen können. Die Beschichtung weist bevorzugt eine kleinere Fläche als die Verbundscheibe auf, so dass ein umlaufender Randbereich mit einer Breite von bevorzugt 0,5 mm bis 15 mm nicht mit der Beschichtung versehen ist. Die leitfähige Beschichtung ist dadurch innerhalb der Zwischenschicht vor Kontakt mit der umgebenden Atmosphäre geschützt, was im Hinblick auf die Vermeidung von Korrosion vorteilhaft ist. Die Verbundscheibe kann auch weitere unbeschichtete Bereiche enthalten, beispielsweise Datentransmissionsfenster oder Kommunikationsfenster.

In einer vorteilhaften Ausgestaltungsform der erfindungsgemäßen Verbundscheibe weist die Zwischenschicht mindestens eine Öffnung, bevorzugt mindestens zwei Öffnungen und besonders bevorzugt 3 bis 100 Öffnungen auf, wobei die Glasfaser durch die Öffnung, beziehungsweise durch die Öffnungen geführt ist und dadurch abschnittsweise zwischen der Zwischenschicht und der Außenscheibe und zwischen der Zwischenschicht und der Innenscheibe angeordnet ist. Durch die Anordnung der Glasfaser in mindestens einer Öffnung der Zwischenschicht wird die Position der Glasfaser relativ zur Zwischenschicht fixiert, so dass ein Verrutschen der Glasfaser während der Herstellung und Lamination der Verbundscheibe vermieden werden kann.

Ein weiterer Aspekt der Erfindung ist eine Verbundscheibenanordnung, mindestens umfassend:
- eine erfindungsgemäße Verbundscheibe und
- ein Leuchtmittel zur Einkopplung von Licht in die Glasfaser.

Das Leuchtmittel ist bevorzugt an einer Seitenkante der Verbundscheibe angeordnet. Im Falle einer beweglichen Verbundscheibe, wie einer Seitenscheibe, die geöffnet werden kann, ist das Leuchtmittel bevorzugt mit der Verbundscheibe verbunden und ebenfalls beweglich angeordnet. Es versteht sich, dass das Leuchtmittel auch unabhängig von der Verbundscheibe installiert sein kann und über eine bevorzugt nicht-lichtstreuende Glasfaser mit der erfindungsgemäßen lichtstreuenden Glasfaser verbunden sein kann.

Vorteilhafte Leuchtmittel sind beispielsweise Laserdioden, Leuchtdioden (LED) oder Glühbirnen, wobei die Erfindung jegliche Art von Lichtquelle, die für eine jeweilige Verwendung geeignet ist, umfasst. Die erfindungsgemäßen Leuchtmittel beinhalten auch Linsensysteme, Spiegelsysteme, Reflektorsysteme oder andere Lichtleiter, die zur Einkopplung des Lichts in die erfindungsgemäße Glasfaser dienen können.

Die Leuchtmittel können farbig oder weiß sein. Die Leuchtmittel können auch im ultravioletten Bereich Licht abgeben, sofern die Glasfaser oder ihre Umgebung das ultraviolette Licht in sichtbares Licht wandeln können. Bevorzugte Lichtfarben sind rot (wegen der ausgeprägten Signalwirkung), grün (wegen der hohen Empfindlichkeit des menschlichen Auges für das grüne Farbspektrum) und blau (wegen seiner besonders ästhetischen und wenig blendenden Wirkung).

Es versteht sich, dass eine Verbundscheibe eine oder mehrere Glasfasern aufweisen kann. Dabei sind bevorzugt alle Glasfaser gemeinsam oder jede Glasfaser einzeln, die mit einem Leuchtmittel gekoppelt. Die Glasfaser oder die Glasfasern können in jeder beliebigen, technisch möglichen Form in der Verbundscheibe angeordnet sein, beispielsweise im Randbereich, in der Mitte, geradlinig, geschwungen oder als Schriftzug oder Symbol.

Ein weiterer Aspekt der Erfindung ist ein Verfahren zur Herstellung einer erfindungsgemäßen Verbundscheibe, mindestens umfassen:
(a) Bereitstellen einer Glasfaser, einer Zwischenschicht, einer Außenscheibe mit einer innenseitigen Oberfläche II und einer Innenscheibe mit einer außenseitigen Oberfläche III,
(b) Anordnen der Glasfaser auf der Zwischenschicht, auf der innenseitigen Oberfläche II der Außenscheibe oder auf der außenseitigen Oberfläche III der Innenscheibe,
(c) Anordnen der Zwischenschicht zwischen der Außenscheibe und der Innenscheibe,
(d) Verbinden der innenseitigen Oberfläche II der Außenscheibe mit der außenseitigen Oberfläche III der Innenscheibe über die Zwischenschicht durch Lamination.

Die Zwischenschicht ist bevorzugt eine thermoplastische Zwischenschicht und verbindet über Lamination die Außenscheibe und die Innenscheibe miteinander.

Die Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und/oder Druck.

Um ein Verrutschen der Glasfaser in den Verfahrensschritten b) und c) zu vermeiden, ist es vorteilhaft, die Glasfaser im oder nach dem Verfahrensschritt b) zu fixieren. Dazu kann die Glasfaser bevorzugt mit der Zwischenschicht, der innenseitigen Oberfläche II der Außenscheibe oder der außenseitigen Oberfläche III der Innenscheibe verbunden werden.

In einer vorteilhaften Ausführungsform des erfindungsgemäßen Verfahrens wird im Verfahrensschritt (b) die Glasfaser durch lokales Erwärmen und/oder durch Ausüben eines Druckes in die Oberfläche der Zwischenschicht eingebettet. Durch das Einbetten in die Oberfläche der Zwischenschicht wird die Glasfaser mit der Zwischenschicht fest verbunden und die Position der Glasfaser relativ zur Zwischenschicht fixiert. Die Einwirkung von Druck und Temperatur kann bevorzugt durch ein Heizelement, bevorzugt einen Lötkolben, eine beheizte Anpresswalze, eine Wärmeplatte, insbesondere ein Bügeleisen, oder einen Heißluftstrom in Kombination mit einem Anpressmittel erzeugt werden. Der Druck und die Temperatur müssen so gewählt werden, dass die lichtstreuenden Eigenschaften der Glasfaser nicht beeinträchtigt werden. Einen geeigneten Druck und eine geeignete I emperatur können vom Fachmann im Rahmen einfacher Experimente ermittelt werden. Dies hat den besonderen Vorteil, dass keine weiteren Befestigungsmittel benötigt werden und die Fixierung besonders einfach erfolgen kann.

In einer vorteilhaften Ausführungsform des erfindungsgemäßen Verfahrens wird im Verfahrensschritt (b) die Glasfaser durch mindestens ein Befestigungsmittel mit der Zwischenschicht, der Innenseite II der Außenscheibe und/oder der Außenseite III der Innenscheibe verbunden. Das Befestigungsmittel ist bevorzugt ein Klebemittel und besonders bevorzugt ein flüssiger Klebstoff, ein einseitiges Klebeband oder ein doppelseitiges Klebeband. Derartige Klebemittel sind besonders einfach und kostengünstig und erlauben ein sicheres Fixieren der Glasfaser.

Besonders vorteilhaft ist es, wenn die Glasfaser durch mindestens ein Befestigungsmittel mit entweder der Zwischenschicht, der Innenseite II der Außenscheibe oder der Außenseite III der Innenscheibe verbunden. Der so entstandene Vorverbund kann dann bequem gelagert, transportiert oder weiterverarbeitet werden, ohne dass die Glasfaser verrutscht. Insbesondere kann in Verfahrensschritt (c) mit hoher Präzision die Zwischenschicht zwischen der Außenscheibe und der Innenscheibe angeordnet, wobei die Glasfaser die gewünschte Position beibehält.

Beispielsweise wird ein doppelseitiges Klebeband auf der Zwischenschicht, der Innenseite II der Außenscheibe oder der Außenseite III der Innenscheibe entlang der späteren Position der Glasfaser aufgeklebt werden und in einem weiteren Schritt, die Glasfaser auf die zweite Klebeschicht des doppelseitigen Klebebandes aufgebracht und dadurch befestigt werden.

In einer alternativen oder zusätzlichen vorteilhaften Ausführungsform des erfindungsgemäßen Verfahrens wird im Verfahrensschritt (b) die Glasfaser mit der Zwischenschicht durch mindestens eine Schnur verbunden. Dabei wird die Schnur um die Glasfaser und durch mindestens zwei Öffnungen der Zwischenschicht geführt, so dass die Schnur die Glasfaser und den Abschnitt der Zwischenschicht zwischen den Öffnungen schleifenförmig umgreift. Die Schnur kann bevorzugt durch mindestens einen Knoten, einen Klebepunkt oder bei geeignetem Schnurmaterial durch eine lokale Schmelzverklebung fixiert werden.

Ein weiterer Aspekt der Erfindung umfasst die Verwendung der erfindungsgemäßen Verbundscheibe in Fortbewegungsmitteln für den Verkehr auf dem Lande, in der Luft oder zu Wasser, insbesondere in Zügen, Schiffen und Kraftfahrzeugen, beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

Die erfindungsgemäße Verbundscheibe ist besonders bevorzugt eine abschnittsweise rahmenlose Verglasung, wobei die erfindungsgemäße lichtstreuende Glasfaser in der Nähe der rahmenlosen Seitenkanten angeordnet ist. Gleichwohl kann die lichtstreuende Glasfaser auch an einer inneren Seitenkante, beispielsweise im Bereich eines aus der Verglasung herausgeschnittenen Ausschnitts wie einer Glasluke in einer Dachscheibe angeordnet sein.

Die erfindungsgemäße Verbundscheibe ist bevorzugt als feststehende Verglasung ausgebildet, das heißt die Verglasung ist relativ zu ihrer Umgebung feststehend angeordnet und beispielsweise durch einen abschnittsweise Befestigung fixiert, beispielsweise als Windschutzscheibe in einem Fahrzeug oder als Trennscheibe in einem Gebäude oder in einem Möbelstück.

Die erfindungsgemäße Verbundscheibe ist alternativ als bewegliche Verglasung ausgebildet, das heißt die Verglasung ist relativ zu ihrer Umgebung beweglich angeordnet, beispielsweise als in einer Tür beweglich angeordnete Verglasung wie eine Seitenscheibe in einer Fahrzeugtür.

Ein Leuchtmittel kann in einer Verbundscheibenanordnung zur Kennzeichnung einer Heizfunktion, einer Bewegung der erfindungsgemäßem Verbundscheibe, bevorzugt eines sich öffnenden oder schließenden Seitenfensters und/oder als Warnfunktion, bevorzugt bei einer rahmenlosen Seitenscheibe in einer geöffneten Fahrzeugtür verwendet werden. Eine bevorzugte Verwendung umfasst die Verwendung der Verbundscheibenordnung für eine Coming-Home-Funktion und/oder eine Leaving-Home-Funktion.

Als Coming-Home-Funktion (engl. 'heim kommen') wird üblicherweise eine Funktion bezeichnet, bei der nach Verlassen eines Fahrzeugs die Fahrzeugbeleuchtung noch eine gewisse Zeit nachleuchtet und sich dann automatisch abschaltet. Dies hat den Zweck, den Weg vom Parkplatz zur Haustür auszuleuchten, also das Heimkommen zu erleichtern, sowie das Fahrzeug während des Aussteigens besser sichtbar bleiben zu lassen.

Als Leaving-Home-Funktion (engl. 'aus dem Haus gehen') wird üblicherweise eine Funktion bezeichnet, bei der sich, beispielsweise nach Öffnen des Fahrzeuges per Fernbedienung die Fahrzeugbeleuchtung einschaltet, um den Weg von der Haustür zum Auto auszuleuchten.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1A: eine Draufsicht auf eine Ausgestaltung der erfindungsgemäßen Verbundscheibenanordnung,
- Figur 1B: eine Querschnittsdarstellung entlang der Schnittlinie A-A' durch die Verbundscheibe aus Figur 1A,
- Figur 2A: eine Draufsicht auf eine alternative Ausgestaltung der erfindungsgemäßen Verbundscheibenanordnung,
- Figur 2B: eine Querschnittsdarstellung entlang der Schnittlinie A-A' durch die Verbundscheibe aus Figur 2A,
- Figur 3A: eine Draufsicht auf eine alternative Ausgestaltung der erfindungsgemäßen Verbundscheibenanordnung,
- Figur 3B: eine Querschnittsdarstellung entlang der Schnittlinie A-A' durch die Verbundscheibe aus Figur 3A,
- Figur 3C: eine vergrößerte Darstellung einer Durchsicht durch die Verbundscheibe aus Figur 3A,
- Figur 3D: eine vergrößerte Darstellung einer Durchsicht durch eine alternative Verbundscheibe,
- Figur 4A: eine Draufsicht auf eine alternative Ausgestaltung der erfindungsgemäßen Verbundscheibenanordnung,
- Figur 4B: eine Querschnittsdarstellung entlang der Schnittlinie A-A' durch die Verbundscheibe aus Figur 4A,
- Figur 4C: eine vergrößerte Darstellung einer Durchsicht durch die Verbundscheibe aus Figur 4A,
- Figur 4D: eine vergrößerte Darstellung einer Durchsicht durch eine alternative Verbundscheibe,
- Figur 5A: eine Draufsicht auf eine alternative Ausgestaltung der erfindungsgemäßen Verbundscheibenanordnung,
- Figur 5B: eine Querschnittsdarstellung entlang der Schnittlinie A-A' durch die Verbundscheibe aus Figur 5A,
- Figur 5C: eine vergrößerte Darstellung einer Durchsicht durch die Verbundscheibe aus Figur 5A,
- Figur 5D: eine vergrößerte Darstellung einer Durchsicht durch eine alternative Verbundscheibe,
- Figur 6: ein Flussdiagramm einer Ausführungsform des erfindungsgemäßen Verfahrens.

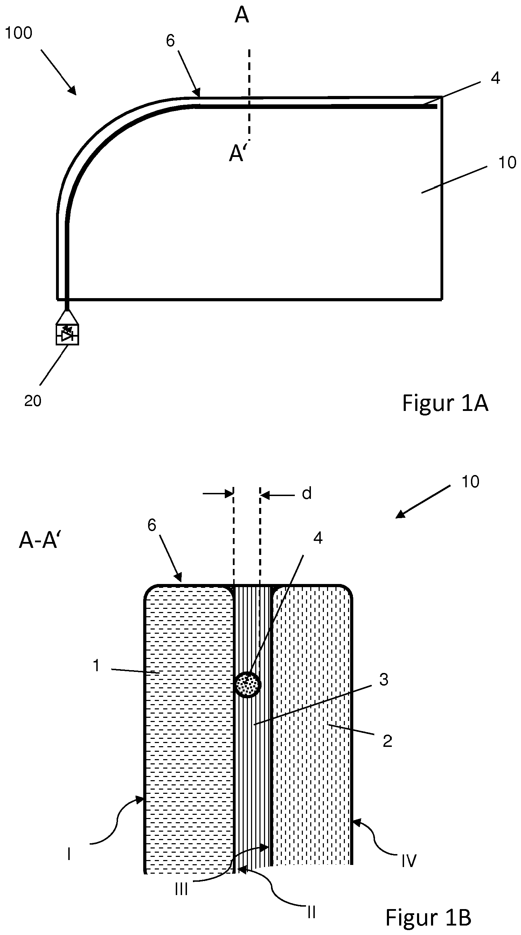

Figur 1A zeigt eine Draufsicht auf eine erfindungsgemäße Verbundscheibenanordnung 100, die eine erfindungsgemäße Verbundscheibe 10 und ein Leuchtmittel 20 umfasst. Figur 1B zeigt eine Querschnittsdarstellung entlang der Schnittlinie A-A' durch die Verbundscheibe 10 aus Figur 1A. Die Verbundscheibe 10 ist in diesem Beispiel als Seitenscheibe für ein Seitenfenster eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 2,1 mm auf. Die thermoplastische Zwischenschicht 3 ist beispielsweise eine Folie aus Polyvinylbutyral (PVB) mit einer Dicke von 0,76 mm. Es versteht sich, dass auch andere Glasscheiben oder Polymerscheiben als Außenscheibe und Innenscheibe verwendet werden können. Des Weiteren kann die Dicke der Außenscheibe 1 und Innenscheibe 2 an die jeweilige Verwendung angepasst sein.

In diesem Ausgestaltungsbeispiel ist zwischen der innenseitigen Oberfläche II der Außenscheibe 1 und Zwischenschicht 3 eine lichtstreuende Glasfaser 4 angeordnet. Es versteht sich, dass die Glasfaser 4 auch zwischen der Zwischenschicht 3 und der außenseitigen Oberfläche III der Innenscheibe 2 angeordnet sein. Alternative kann auch eine weitere, hier nicht dargestellte Zwischenschicht zwischen der Zwischenschicht 3 und einer der Scheiben 1,2 angeordnet sein, wobei die Glasfaser 4 zwischen den beiden Zwischenschichten angeordnet ist.

Bei der Herstellung der Verbundscheibe 10 wird die Außenscheibe 1 über die Zwischenschicht 3 mit der Innenscheibe 2 durch Lamination verbunden. Die Außenscheibe 1 und die Innenscheibe 2 sind bei den dafür üblichen Temperaturen und Drücken sehr starr und unnachgiebig. Die Zwischenschicht 3 ist bei den dafür üblichen Temperaturen und Drücken plastisch, so dass die Glasfaser 4 in die Oberfläche der Zwischenschicht 3 eindringen kann und dort eingebettet wird.

Um die Herstellung zu erleichtern, ist es vorteilhaft, die Glasfaser 4 vor dem Laminieren auf der Zwischenschicht 3, der innenseitigen Oberfläche II der Außenscheibe 1 oder der außenseitigen Oberfläche III der Innenscheibe 2 zu befestigen. In einer vorteilhaften Ausführungsform wird die Glasfaser 4 unter Einwirkung von Druck und Temperatur, beispielsweise durch Aufbügeln mit einem Bügeleisen, mit einer der Oberflächen der Zwischenschicht 3 verbunden. Der so erzeugte Vorverbund aus Glasfaser 4 und Zwischenschicht 3 kann besonders einfach zwischen der Außenscheibe 1 und der Innenscheibe 2 angeordnet werden, wobei die Glasfaser 4 sehr definiert und präzise positioniert werden kann.

Die lichtstreuende Glasfaser 4 hat einen Durchmesser d von beispielsweise 200 µm und ist dazu geeignet über ihre Seitenwand entlang ihrer Erstreckungslänge Licht auszusenden. Das Licht wird dabei über eine Stirnfläche der Glasfaser 4 in die Glasfaser 4 eingekoppelt. Dazu ist an einem Ende der Glasfaser 4 ein Leuchtmittel 20 angeordnet. Das Leuchtmittel 20 besteht beispielsweise aus einer Laserdiode, die, beispielsweise über einen Reflektor, Licht in die Glasfaser 4 einkoppeln kann. Bei Anlegen einer Spannung an die Laserdiode wird Licht in die Glasfaser 4 eingekoppelt. Die Glasfaser 4 streut das Licht an ihrer Oberfläche entlang ihrer gesamten Erstreckungslänge, so dass die Glasfaser 4 über ihre gesamte Erstreckungslänge leuchtet.

Die Verbundscheibe 10 ist hier beispielsweise eine Seitenscheibe einer Fahrzeugtür eines Personenkraftfahrzeugs und die Glasfaser 4 in der Nähe der vorderen und oberen Seitenkante 6 der Verbundscheibe 10 angeordnet. Die Einfassung der Seitenscheibe in der Fahrzeugtür ist beispielsweise rahmenlos, so dass die Seitenscheibe nur an ihrer unteren Seite geführt und in die Fahrzeugtür eingelassen ist. Das Leuchtmittel 20 ist hier beispielsweise eine leistungsstarke Leuchtdiode.

Die mit dieser Verbundscheibe 10 hergestellte Verbundscheibenanordnung 100 ist beispielsweise derart konfiguriert, dass das Leuchtmittel 20 beim Öffnen der Fahrzeugtür aktiviert wird und die Glasfaser 4 beleuchtet. Dies hat den besonderen Vorteil, dass die Fahrzeugtür im geöffneten Zustand beleuchtet ist und für andere Verkehrsteilnehmer besonders gut erkennbar ist. Die Sichtbarkeit der derart beleuchteten Verbundscheibe 10 ist bei Dunkelheit besonders erhöht - insbesondere da die Verbundscheibe 10 in diesem Beispiel rahmenlos ist und nur an ihrer unteren Seitenkante in der Fahrzeugtür befestigt ist. Die durch die Glasfaser 4 beleuchtete Seitenkante der Verbundscheibe 10 ist somit frei und ungehindert sichtbar.

Das Leuchtmittel 20 kann dabei einfarbig sein oder verschiedene Zustände durch verschiedene Farben kennzeichnen. So ist die Warnfunktion für ein rotes Leuchtmittel besonders hoch, da eine rote Farbe üblicherweise mit einer Gefahr assoziiert wird. Grüne Leuchtmittel sind bei Dunkelheit besonders gut zu erkennen, da das menschliche Auge eine besonders große Empfindlichkeit für das grüne Farbspektrum aufweist.

In einer weiteren beispielshaften Ausgestaltung weist das Leuchtmittel 20 beispielsweise eine rote Leuchtdiode und eine blaue Leuchtdiode auf. Die Verbundscheibenanordnung 100 ist dabei beispielsweise mit der Fahrzeugelektronik derart verbunden, dass bei einem Öffnen der Verbundscheibe 10 über elektrische Fensterheber, die Glasfaser 4 mit blauem Licht beleuchtet wird und beim Schließen der Verbundscheibe 10 die Glasfaser 4 mit rotem Licht beleuchtet wird. Dies hat den besonderen Vorteil, dass dadurch die Richtung der Bewegung der Verbundscheibe 10 relativ zum Türrahmen sichtbar wird und Personen die Gefahr eines Einklemmens von Körperteilen oder Gegenständen in dem sich schließenden Fenster schnell erkennen können. Es versteht sich, dass auch andere Farben oder weißes Licht für die Beleuchtung der Glasfaser 4 verwendet werden können. Des Weiteren können auch andere Funktionen über die Beleuchtung der Verbundscheibe 10 angezeigt werden oder besonders ästhetische Beleuchtungen realisiert werden.

Erfindungsgemäße Verbundscheiben 10 können optional eine zusätzliche elektrische Funktion und beispielsweise eine elektrische Heizfunktion aufweisen. Dabei können beispielsweise hier nicht dargestellte Heizmittel, wie Heizdrähte oder Heizschichten im Bereich zwischen Außenscheibe 1 und Innenscheibe 2 angeordnet sein. Derartige Heizdrähte bestehen beispielsweise aus Kupfer oder Wolfram und weisen eine Dicke von beispielsweise 30 µm auf. Als Heizschichten sind beispielsweise transparente, elektrisch leitfähige Beschichtungen bekannt, wie sie obenstehend beispielsweise beschrieben sind. Heizdrähte und Heizschichten können beispielsweise durch Stromsammelschienen, beispielsweise Streifen einer Kupferfolie mit einer Dicke von beispielsweise 100 µm und einer Breite von beispielsweise 7 mm, gebildet werden. Wird an die Stromsammelschienen eine Spannung angelegt, so fließt ein Strom durch die Heizdrähte oder die Heizschicht, wodurch die Heizwirkung entsteht. Die Spannung kann die übliche KFZ-Bordspannung von 14 V sein, oder auch eine Spannung von beispielsweise 42 V oder 48 V. Es versteht sich, dass die Spannung auch eine übliche Netzspannung von beispielsweise 110 V oder 220 V sein kann, insbesondere bei Verwendung einer erfindungsgemäßen Verbundscheibe 10 in der Gebäudetechnik, wie einem transparenten Heizkörper. Der entsprechende Beheizungsgrad der Verbundscheibe 10 kann wiederum über die Beleuchtung der Glasfaser 4 durch das Leuchtmittel 20 angezeigt werden.

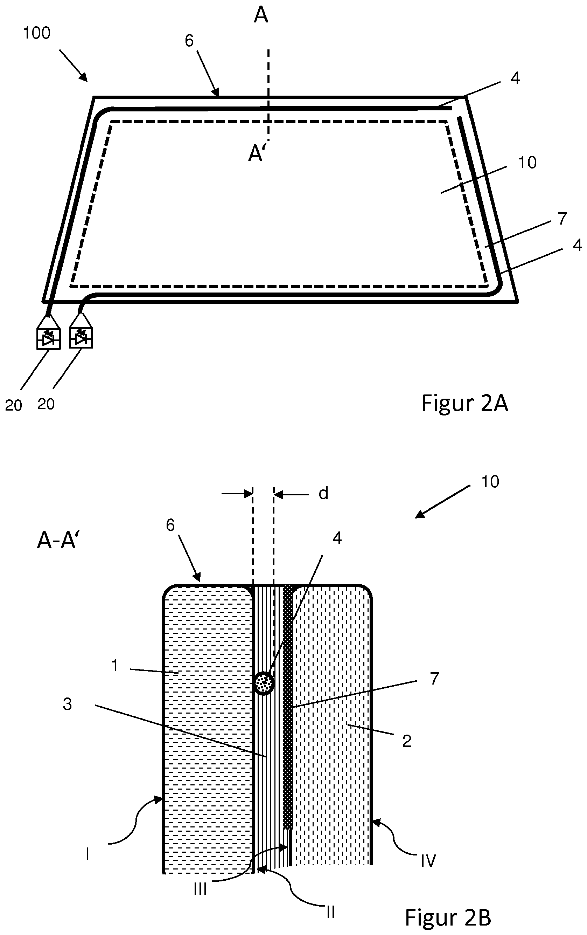

Figur 2A zeigt eine Draufsicht auf eine alternative erfindungsgemäße Verbundscheibenanordnung 100, die eine alternative erfindungsgemäße Verbundscheibe 10 und ein Leuchtmittel 20 umfasst. Figur 2B zeigt eine Querschnittsdarstellung entlang der Schnittlinie A-A' durch die Verbundscheibe 10 aus Figur 2A. Die Verbundscheibe 10 ist in diesem Beispiel als Windschutzscheibe eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 2,1 mm auf. Die thermoplastische Zwischenschicht 3 ist beispielsweise eine Folie aus Polyvinylbutyral (PVB) mit einer Dicke von 0,76 mm. Es versteht sich, dass auch andere Glasscheiben oder Polymerscheiben als Außenscheibe 1 und Innenscheibe 2 verwendet werden können. Des Weiteren kann die Dicke der Außenscheibe 1 und Innenscheibe 2 an die jeweilige Verwendung angepasst sein.

In diesem Ausgestaltungsbeispiel sind zwischen der innenseitigen Oberfläche II der Außenscheibe 1 und der Zwischenschicht 3 zwei lichtstreuende Glasfasern 4 angeordnet. Es versteht sich, dass die Glasfasern 4 auch zwischen der Zwischenschicht 3 und der außenseitigen Oberfläche III der Innenscheibe 2 angeordnet sein können. Alternative kann auch eine weitere, hier nicht dargestellte Zwischenschicht zwischen der Zwischenschicht 3 und einer der Scheiben 1,2 angeordnet sein, wobei die Glasfasern 4 zwischen den beiden Zwischenschichten angeordnet sein können.

Bei der Herstellung der Verbundscheibe 10 wird die Außenscheibe 1 durch Lamination über die Zwischenschicht 3 mit der Innenscheibe 2 verbunden. Die Außenscheibe 1 und die Innenscheibe 2 sind bei den dafür üblichen Temperaturen und Drücken sehr starr und unnachgiebig. Die Zwischenschicht 3 ist dann plastisch, so dass die Glasfaser 4 in die Oberfläche der Zwischenschicht 3 eindringen kann und dort eingebettet wird.

Die lichtstreuende Glasfasern 4 haben einen Durchmesser d von jeweils 150 µm und sind dazu geeignet über ihre Seitenwand entlang ihrer Erstreckungslänge Licht auszusenden. Das Licht wird dabei über eine Stirnfläche der Glasfaser 4 in die Glasfaser 4 eingekoppelt. Dazu ist an einem Ende jeder Glasfaser 4 ein Leuchtmittel 20 angeordnet. Das Leuchtmittel 20 besteht beispielsweise aus einer Laserdiode, die beispielsweise über einen Reflektor, Licht in die Glasfaser 4 einkoppeln kann. Bei Anlegen einer Spannung an die Laserdiode wird dann Licht in die Glasfaser 4 eingekoppelt. Die Glasfaser 4 streut dann das Licht an ihrer Oberfläche entlang ihrer gesamten Erstreckungslänge, so dass die Glasfaser 4 über ihre gesamte Erstreckungslänge leuchtet.

Die Verbundscheibe 10 weist in diesem Beispiel auf einem umlaufenden Randbereich der außenseitigen Oberfläche III der Innenscheibe 2 einen opaken Abdeckdruck 7 auf, beispielsweise einen Schwarzdruck aus einer keramischen Farbe, die durch Einbrennen eine feste Verbindung mit der gläsernen Oberfläche III der Innenscheibe 2 eingeht. Der Abdeckdruck 7 hat die Aufgabe, die Durchsicht auf die Klebestellen zu verdecken, mit denen die Verbundscheibe 10 in eine Fahrzeugkarosserie eingeklebt ist. Gleichzeitig wird die Klebestelle vor Lichteinstrahlung und insbesondere vor der Einstrahlung von UV-Licht geschützt, die eine beschleunigte Alterung der Klebestelle bewirken würde.

Die Glasfasern 4 sind in diesem Beispiel rahmenförmig im Randbereich der Verbundscheibe 10 angeordnet. Die Glasfasern 4 sind hier beispielsweise in einem Bereich angeordnet, der von der innenseitigen Oberfläche IV der Innenscheibe 2 durch den Abdeckdruck 7 verdeckt wird. Dies bedeutet, dass die Glasfasern 4 vom dem Fahrzeuginnenraum nicht gesehen werden können. Insbesondere gelangt auch an den Seitenwänden der Glasfasern 4 austretendes Licht nicht in den Fahrzeuginnenraum, so dass Innensassen dadurch nicht geblendet oder gestört werden können.

Das Leuchtmittel 20 ist hier beispielsweise eine leistungsstarke Laserdiode. Die mit dieser Verbundscheibe 10 hergestellte Verbundscheibenanordnung 100 ist beispielsweise derart konfiguriert, dass das Leuchtmittel 20 beim Verriegeln oder Entriegeln der Fahrzeugtüren für eine gewisse Zeitdauer von beispielsweise 1 min. die Glasfaser 4 beleuchtet. Dies kann unabhängig oder zeitgleich zur übrigen Fahrzeugbeleuchtung erfolgen. Eine derartige Beleuchtung kann von der Person, die die Verriegelung und Entriegelung, beispielsweise mittels eines Funkempfängers, als eindeutiges Signal dienen, dass das Fahrzeug sicher verriegelt oder entriegelt ist. Gleichzeit kann damit eine Coming-Home- oder eine Leaving-Home-Funktion realisiert werden.

Das Leuchtmittel 20 kann dabei einfarbig sein oder verschiedene Zustände durch verschiedene Farben kennzeichnen. Unterschiedliche Farben lassen dabei eine Verriegelung des Fahrzeugs von einer Entriegelung gut sichtbar unterscheiden. Wird die Beleuchtung der Glasfaser 4 als Warnfunktion verwendet, können beispielsweise eine rotes oder orangenes Leuchtmittel verwendet werde, da eine rote oder orange Farbe üblicherweise mit einer Gefahr assoziiert wird. Grüne Leuchtmittel sind bei Dunkelheit besonders gut zu erkennen, da das menschliche Auge eine besonders große Empfindlichkeit für das grüne Farbspektrum aufweist.

Es versteht sich, dass die Glasfaser 4 nicht oder nicht nur entlang einer Seitenkante einer Scheibe angeordnet sein muss, sondern beliebig angeordnet sein kann. Insbesondere können eine oder mehrere Glasfasern 4 in Form eines Symbols, beispielsweise eines Warndreiecks, angeordnet sein, oder einen Schriftzug bilden.

Es versteht sich weiterhin, dass die Glasfaser 4 Bereiche aufweisen kann, in denen kann Licht über die Seitenwände der Glasfaser 4 austritt, so dass voneinander unzusammenhängende Symbole beleuchtet werden können.

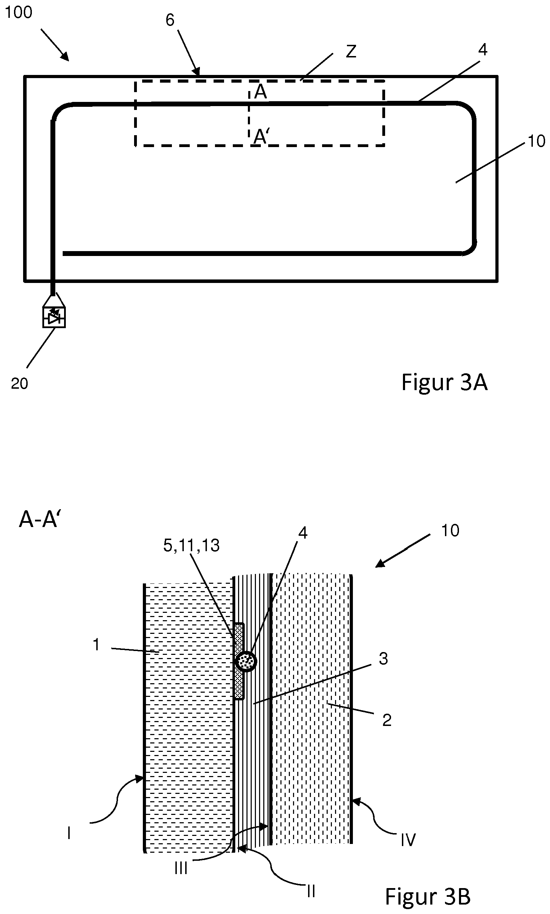

Figur 3A zeigt eine Draufsicht auf eine alternative erfindungsgemäße Verbundscheibenanordnung 100, die eine alternative erfindungsgemäße Verbundscheibe 10 und ein Leuchtmittel 20 umfasst. Figur 3B zeigt eine Querschnittsdarstellung entlang der Schnittlinie A-A' durch die Verbundscheibe 10 aus Figur 3A. Die Verbundscheibe 10 ist in diesem Beispiel als Dachscheibe eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 1,5 mm auf. Die thermoplastische Zwischenschicht 3 ist beispielsweise eine dreilagige Folie aus Polyvinylbutyral (PVB) mit einer Gesamtdicke von 0,86 mm. Es versteht sich, dass auch andere Glasscheiben oder Polymerscheiben als Außenscheibe und Innenscheibe verwendet werden können. Des Weiteren kann die Dicke der Außenscheibe 1 und Innenscheibe 2 an die jeweilige Verwendung angepasst sein.

In diesem Ausgestaltungsbeispiel ist zwischen der innenseitigen Oberfläche II der Außenscheibe 1 und Zwischenschicht 3 eine lichtstreuende Glasfaser 4 angeordnet. Es versteht sich, dass die Glasfaser 4 auch zwischen der Zwischenschicht 3 und der außenseitigen Oberfläche III der Innenscheibe 2 angeordnet sein. Alternative kann eine weitere, hier nicht dargestellte Zwischenschicht zwischen der Zwischenschicht 3 und einer der Scheiben 1,2 angeordnet sein, wobei die Glasfaser 4 zwischen den beiden Zwischenschichten angeordnet ist.

Die lichtstreuende Glasfaser 4 hat einen Durchmesser d von beispielsweise 200 µm und ist dazu geeignet über ihre Seitenwand entlang ihrer Erstreckungslänge Licht auszusenden. Das Licht wird dabei über eine Stirnfläche der Glasfaser 4 in die Glasfaser 4 eingekoppelt. Dazu ist an einem Ende der Glasfaser 4 ein Leuchtmittel 20 angeordnet. Das Leuchtmittel 20 besteht beispielsweise aus einer Laserdiode, die beispielsweise über einen Reflektor, Licht in die Glasfaser 4 einkoppeln kann. Bei Anlegen einer Spannung an die Laserdiode wird dann Licht in die Glasfaser 4 eingekoppelt. Die Glasfaser 4 streut dann das Licht an ihrer Oberfläche entlang ihrer gesamten Erstreckungslänge, so dass die Glasfaser 4 über ihre gesamte Erstreckungslänge leuchtet.

In diesem Beispiel wird zur Herstellung der erfindungsgemäßen Verbundscheibe 10, die Glasfaser 4 zunächst mittels eines Befestigungsmittels 5 beispielsweise auf der innenseitige Oberfläche II der Außenscheibe 1 angeordnet. Das Befestigungsmittel 5 ist beispielsweise ein Klebemittel 11 und in diesem Ausgestaltungsbeispiel ein doppelseitiges Klebeband 13. Das doppelseitige Klebeband 13 ist hier zwischen der innenseitigen Oberfläche II der Außenscheibe 1 und der Glasfaser 4 angeordnet. Das doppelseitige Klebeband 13 umfasst beispielsweise einen transparenten Trägerfilm aus einem Kunststoff, wobei der Trägerfilm beidseitig einen transparenten Klebstoff aufweist. Das Klebemittel 11 ist transparent und nach der Lamination der Verbundscheibe 10 mit dem Auge kaum zu erkennen.

Es versteht sich, dass die Glasfaser 4 auch auf der Zwischenschicht 3 oder auf der außenseitigen Oberfläche III der Innenscheibe 2 durch das Klebemittel 11 befestigt werden kann.

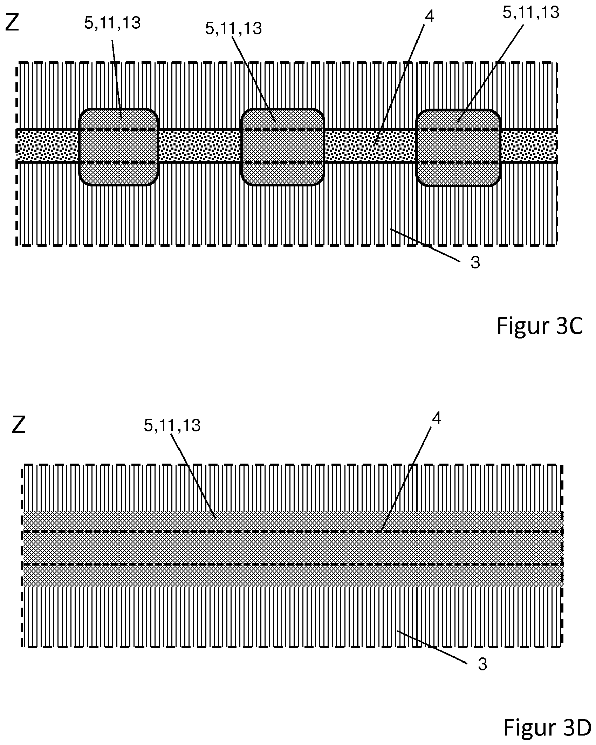

Figur 3C zeigt eine vergrößerte Darstellung des Bereichs Z einer Durchsicht durch die Verbundscheibe 10 aus Figur 3A in einer Draufsicht auf die außenseitige Oberfläche I der Außenscheibe 1. Die Glasfaser 4 ist durch eine Vielzahl von Befestigungsmitteln 5 entlang der Erstreckungsrichtung der Glasfaser 4 angeordnet. Die Klebemittel 11 sind hier beispielsweise rechteckförmige Abschnittes eines doppelseitigen Klebebands 13. Bei der Herstellung werden beispielsweise die Abschnitte des doppelseitigen Klebebands 13 entlang einer gewünschten Kontur über den Klebstoff auf einer Seite des doppelseitigen Klebebands 13 auf die Außenscheibe 1 aufgeklebt. In einem zweiten Schritt wird dann die Glasfaser 4 mit dem Klebstoff auf der zweiten Seite des doppelseitigen Klebebands 13 befestigt. Die derartig befestigte Glasfaser 4 ist damit fest fixiert und ein Verrutschen der Glasfaser 4 während des Anordnens der Stapelfolge aus Außenscheibe 1, Zwischenschicht 3 und Innenscheibe 2 wird sicher vermieden.

Bei der anschließenden Lamination der Stapelfolge zur Verbundscheibe 10 wird die Außenscheibe 1 über die Zwischenschicht 3 mit der Innenscheibe 2 verbunden. Die Außenscheibe 1 und die Innenscheibe 2 sind bei den dafür üblichen Temperaturen und Drücken sehr starr und unnachgiebig. Die Zwischenschicht 3 ist dann plastisch, so dass die Glasfaser 4 in die Oberfläche der Zwischenschicht 3 eindringen kann und dort eingebettet wird. Nach der Lamination sind die transparenten Abschnitte des Klebemittels 11 kaum sichtbar.

Figur 3D zeigt eine vergrößerte Darstellung des Bereichs Z einer Durchsicht durch eine alternative Verbundscheibe 10 nach Figur 3A in einer Draufsicht auf die außenseitige Oberfläche I der Außenscheibe 1. Im Unterschied zur Figur 3C ist die Glasfaser 4 durch ein streifenförmiges Befestigungsmitteln 5 entlang der Erstreckungsrichtung der Glasfaser 4 auf innenseitigen Oberfläche II der Außenscheibe 1 befestigt. Das Befestigungsmittel 5 ist hier ein Klebemittel 11 und beispielsweise ein streifenförmig ausgebildetes, doppelseitiges Klebebands 13. Bei der Herstellung werden beispielsweise das doppelseitige Klebebands 13 entlang einer gewünschten Kontur über den Klebstoff auf einer Seite des doppelseitigen Klebebands 13 auf die Außenscheibe 1 aufgeklebt. In einen zweiten Schritt wird dann die Glasfaser 4 mit dem Klebstoff auf der zweiten Seite des doppelseitigen Klebebands 13 befestigt. Die derartige befestigte Glasfaser 4 ist damit fest fixiert und ein Verrutschen der Glasfaser 4 während des Anordnens der Stapelfolge aus Außenscheibe 1, Zwischenschicht 3 und Innenscheibe 2 wird sicher vermieden.

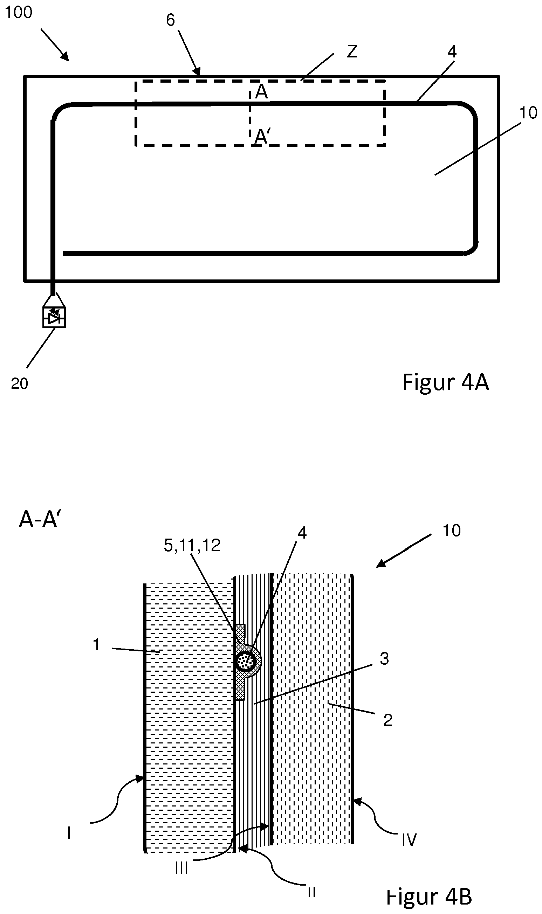

Figur 4A zeigt eine Draufsicht auf eine alternative erfindungsgemäße Verbundscheibenanordnung 100, die eine alternative erfindungsgemäße Verbundscheibe 10 und ein Leuchtmittel 20 umfasst. Figur 4B zeigt eine Querschnittsdarstellung entlang der Schnittlinie A-A' durch die Verbundscheibe 10 aus Figur 4A. Die Verbundscheibe 10 aus der Figur 4A entspricht im Wesentlichen der Verbundscheibe 10 der Figur 3A, so dass im Folgenden nur auf die Unterschiede zur Verbundscheibe 10 aus Figur 4A hingewiesen wird.

In diesem Beispiel wird zur Herstellung der Herstellung der erfindungsgemäßen Verbundscheibe 10, die Glasfaser 4 zunächst mittels eines Befestigungsmittels 5 beispielsweise auf der innenseitige Oberfläche II der Außenscheibe 1 angeordnet. Das Befestigungsmittel 5 ist beispielsweise ein Klebemittel 11 und in diesem Ausgestaltungsbeispiel ein einseitiges Klebeband 12. Die Glasfaser 4 wird mit dem einseitigen Klebeband 12 auf der innenseitigen Oberfläche II der Außenscheibe 1 befestigt. Das heißt, dass die Glasfaser 4 zwischen der Außenscheibe 1 und dem einseitigen Klebeband 12 angeordnet wird. Das einseitige Klebeband 12 umfasst beispielsweise einen transparenten Trägerfilm aus einem Kunststoff, wobei der Trägerfilm einseitig einen transparenten Klebstoff aufweist. Das Klebemittel 11 ist transparent und nach der Lamination der Verbundscheibe 10 mit dem Auge kaum zu erkennen.

Es versteht sich, dass die Glasfaser 4 auch auf der Zwischenschicht 3 oder auf der außenseitigen Oberfläche III der Innenscheibe 2 durch das Klebemittel 11 befestigt werden kann.

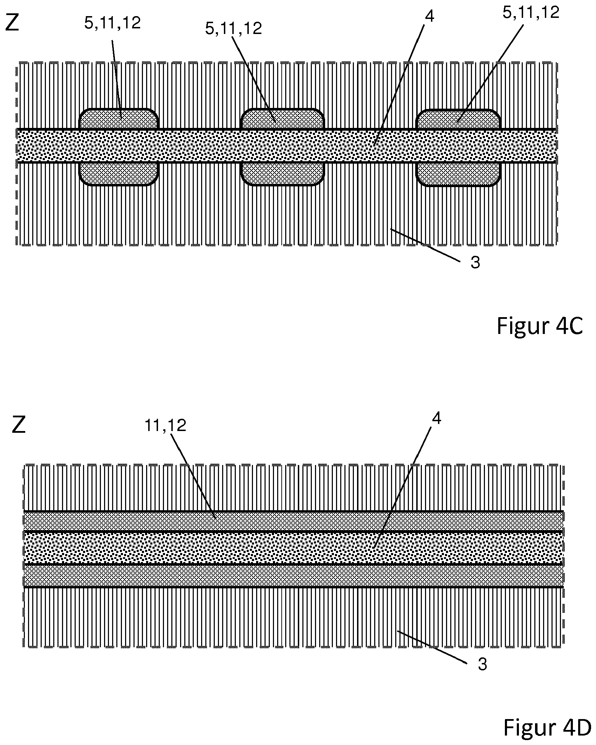

Figur 4C zeigt eine vergrößerte Darstellung des Bereichs Z einer Durchsicht durch die Verbundscheibe 10 aus Figur 4A in einer Draufsicht auf die außenseitige Oberfläche I der Außenscheibe 1. Die Glasfaser 4 ist durch eine Vielzahl von Befestigungsmitteln 5 entlang der Erstreckungsrichtung der Glasfaser 4 angeordnet. Die Klebemittel 11 sind hier beispielsweise rechteckförmige Abschnittes des einseitigen Klebebands 12. Bei der Herstellung wird Glasfaser 4 durch Abschnitte des einseitigen Klebebands 12 entlang einer gewünschten Kontur auf der Außenscheibe 1 befestig. Die derartige befestigte Glasfaser 4 ist damit fest fixiert und ein Verrutschen der Glasfaser 4 während des Anordnens der Stapelfolge aus Außenscheibe 1, Zwischenschicht 3 und Innenscheibe 2 wird sicher vermieden.

Bei der anschließenden Lamination der Stapelfolge zur Verbundscheibe 10 wird die Außenscheibe 1 über die Zwischenschicht 3 mit der Innenscheibe 2 verbunden. Die Außenscheibe 1 und die Innenscheibe 2 sind bei den dafür üblichen Temperaturen und Drücken sehr starr und unnachgiebig. Die Zwischenschicht 3 ist dann plastisch, so dass die Glasfaser 4 in die Oberfläche der Zwischenschicht 3 eindringen kann und dort eingebettet wird. Nach der Lamination sind die transparenten Abschnitte des Klebemittels 11 kaum sichtbar.

Figur 4D zeigt eine vergrößerte Darstellung des Bereichs Z einer Durchsicht durch eine alternative Verbundscheibe 10 nach Figur 4A in einer Draufsicht auf die außenseitige Oberfläche I der Außenscheibe 1. Im Unterschied zur Figur 4C wird die Glasfaser 4 durch ein streifenförmiges Befestigungsmitteln 5 entlang der Erstreckungsrichtung der Glasfaser 4 auf der Außenscheibe 1 befestigt. Das Befestigungsmittel 5 ist hier ein Klebemittel 11 und beispielsweise ein streifenförmig ausgebildetes, einseitiges Klebebands 12. Bei der Herstellung wird beispielsweise das einseitige Klebebands 12 entlang einer gewünschten Kontur auf die Außenscheibe 1 aufgeklebt. Die derartige befestigte Glasfaser 4 ist damit fest fixiert und ein Verrutschen der Glasfaser 4 während des Anordnens der Stapelfolge aus Außenscheibe 1, Zwischenschicht 3 und Innenscheibe 2 wird sicher vermieden.

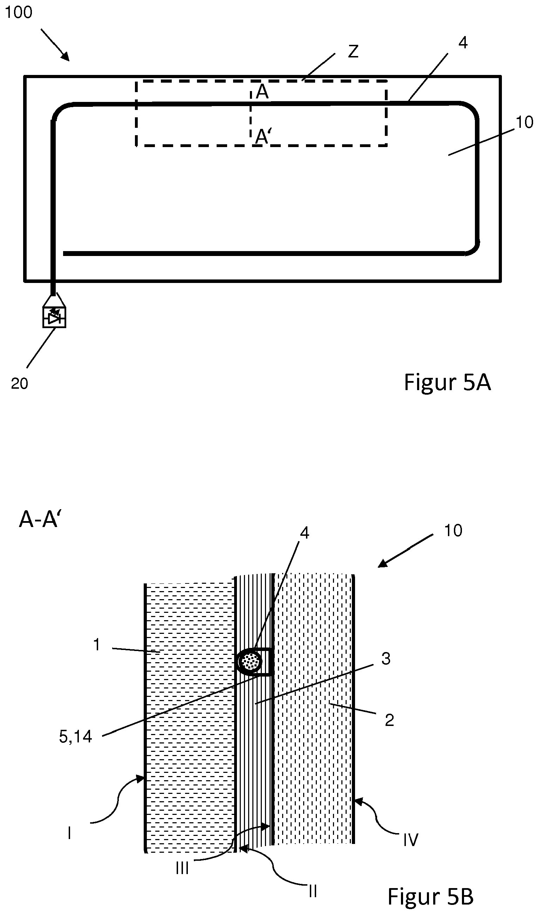

Figur 5A zeigt eine Draufsicht auf eine alternative erfindungsgemäße Verbundscheibenanordnung 100, die eine alternative erfindungsgemäße Verbundscheibe 10 und ein Leuchtmittel 20 umfasst. Figur 5B zeigt eine Querschnittsdarstellung entlang der Schnittlinie A-A' durch die Verbundscheibe 10 aus Figur 5A. Die Verbundscheibe 10 aus der Figur 5A entspricht im Wesentlichen der Verbundscheibe 10 der Figur 3A, so dass im Folgenden nur auf die Unterschiede zur Verbundscheibe 10 aus Figur 5A hingewiesen wird.

In diesem Beispiel wird zur Herstellung der erfindungsgemäßen Verbundscheibe 10, die Glasfaser 4 zunächst mittels eines Befestigungsmittels 5 mit der Zwischenschicht 3 verbunden. Das Befestigungsmittel 5 ist beispielsweise eine Schnur 14, die durch Öffnungen 15 der Zwischenschicht 3 geführt ist und die Glasfaser 4 mit einem Bereich der Zwischenschicht 3 zwischen zwei Öffnungen 15 schleifenförmig umfasst. Die Schnur 14 ist in diesem Ausgestaltungsbeispiel beispielsweise eine transparente Schnur aus Polyamid mit einem Durchmesser von 0,1 mm. Die Schnur 14 ist nach der Lamination der Verbundscheibe 10 mit dem Auge kaum zu erkennen.

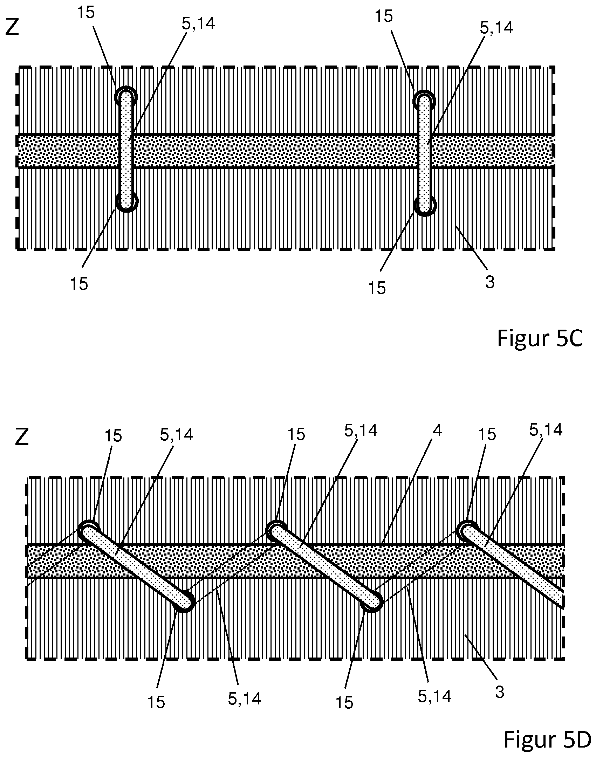

Figur 5C zeigt eine vergrößerte Darstellung des Bereichs Z einer Durchsicht durch die Verbundscheibe 10 aus Figur 5A in einer Draufsicht auf die außenseitige Oberfläche I der Außenscheibe 1. Die Glasfaser 4 ist hier im Bereich Z durch drei Befestigungsmittel 5 entlang der Erstreckungsrichtung mit der Zwischenschicht 3 verbunden. Die Befestigungsmittel 5 sind hier drei Schnürre 14, die durch jeweils zwei Öffnungen 15 der Zwischenschicht 3 geführt sind. Die Schnur 14 bildet eine Schlaufe, die die Glasfaser 4 fest mit der Zwischenschicht 3 verbindet. Die Schlaufe kann beispielsweise durch Knoten, Verschmelzungen oder Klebestellen fixiert sein.

Die derartig befestigte Glasfaser 4 ist damit fest fixiert und ein Verrutschen der Glasfaser 4 während des Anordnens der Stapelfolge aus Außenscheibe 1, Zwischenschicht 3 und Innenscheibe 2 wird sicher vermieden. Bei der anschließenden Lamination der Stapelfolge zur Verbundscheibe 10 wird die Außenscheibe 1 über die Zwischenschicht 3 mit der Innenscheibe 2 verbunden. Die Außenscheibe 1 und die Innenscheibe 2 sind bei den dafür üblichen Temperaturen und Drücken sehr starr und unnachgiebig. Die Zwischenschicht 3 ist dann plastisch, so dass die Glasfaser 4 in die Oberfläche der Zwischenschicht 3 eindringen kann und dort eingebettet wird. Nach der Lamination ist die transparente Schnur 14 kaum sichtbar.

Figur 5D zeigt eine vergrößerte Darstellung des Bereichs Z einer Durchsicht durch eine alternative Verbundscheibe 10 nach Figur 5A in einer Draufsicht auf die außenseitige Oberfläche I der Außenscheibe 1. Im Unterschied zur Figur 5C wird die Glasfaser 4 durch ein langgestrecktes Befestigungsmitteln 5 entlang der Erstreckungsrichtung der Glasfaser 4 mit der Zwischenschicht 3 verbunden. Das Befestigungsmittel 5 ist hier eine Schnur 14, die durch eine Vielzahl von Öffnungen 15 mit der Zwischenschicht 4 vernäht ist. Das bedeutet, dass die Schnur 14 durch jeweils zwei Öffnungen 15 gefädelt ist, wobei auf einer Seite der Zwischenschicht 3 die Glasfaser 4 umschlungen wird. Die derartig befestigte Glasfaser 4 ist damit fest fixiert und ein Verrutschen der Glasfaser 4 während des Anordnens der Stapelfolge aus Außenscheibe 1, Zwischenschicht 3 und Innenscheibe 2 wird sicher vermieden.

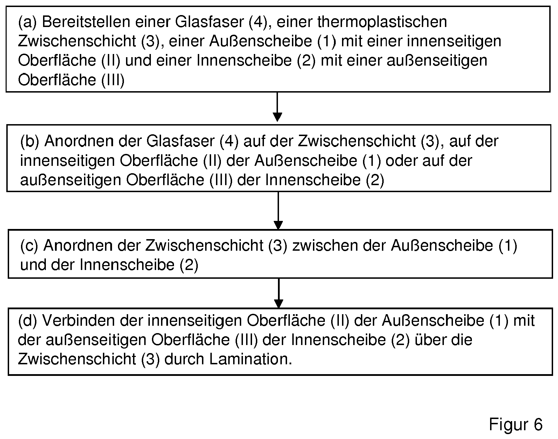

Figur 6 zeigt ein Flussdiagramm eines Ausführungsbeispiels des erfindungsgemäßen Verfahrens zur Herstellung einer erfindungsgemäßen Verbundscheibe 10. Das erfindungsgemäße Verfahren umfasst beispielsweise die folgenden Schritte:
a) Bereitstellen einer Glasfaser 4, einer thermoplastischen Zwischenschicht 3, einer Außenscheibe 1 mit einer innenseitigen Oberfläche II und einer Innenscheibe 2 mit einer außenseitigen Oberfläche III;
b) Anordnen der Glasfaser 4 auf der Zwischenschicht 3, auf der innenseitigen Oberfläche II der Außenscheibe 1 oder auf der außenseitigen Oberfläche III der Innenscheibe 2;
c) Anordnen der Zwischenschicht 3 zwischen der Außenscheibe 1 und der Innenscheibe 2;
d) Verbinden der innenseitigen Oberfläche II der Außenscheibe 1 mit der außenseitigen Oberfläche III der Innenscheibe 2 über die Zwischenschicht 3 durch Lamination.

### Bezugszeichenliste:

- 1: Außenscheibe
- 2: Innenscheibe
- 3: Zwischenschicht, thermoplastische Zwischenschicht
- 4: Glasfaser
- 5: Befestigungsmittel
- 6: Seitenkante
- 7: Abdeckdruck
- 10: Verbundscheibe
- 11: Klebemittel
- 12: einseitiges Klebeband
- 13: doppelseitiges Klebeband
- 14: Schnur
- 15: Öffnung
- 20: Leuchtmittel
- 100: Verbundscheibenanordnung

- d: Durchmesser der lichtstreuenden Glasfaser 4
- A-A': Schnittlinie
- Z: Bereich
- I: außenseitige Oberfläche der Außenscheibe 1
- II: innenseitige Oberfläche der Außenscheibe 1
- III: außenseitige Oberfläche der Innenscheibe 2
- IV: innenseitige Oberfläche der Innenscheibe 2

## Patentansprüche

1. Verbundscheibe (10), mindestens umfassend:
- eine Außenscheibe (1) und eine Innenscheibe (2), welche über eine Zwischenschicht (3) miteinander verbunden sind, und
- mindestens eine lichtstreuende Glasfaser (4), die geeignet ist Licht durch Streuung über ihre Seitenwand entlang ihrer Erstreckungslänge auszusenden und aus mindestens einem Glasfaserkern besteht, der durch eine oder mehrere mantelförmig um den Glasfaserkern angeordnete Schichten, die eine Vielzahl von Streuzentren in Form von Nanoporen oder Nanopartikeln aufweisen, umgeben ist,
wobei die Glasfaser (4) zumindest abschnittsweise zwischen der Zwischenschicht (3) und der Außenscheibe (1) und/oder zwischen der Zwischenschicht (3) und der Innenscheibe (2) angeordnet ist.

2. Verbundscheibe (10) nach Anspruch 1, wobei die Glasfaser (4) in eine Oberfläche der Zwischenschicht (3) eingebettet ist.

3. Verbundscheibe (10) nach Anspruch 1 oder 2, wobei die Glasfaser (4) durch ein Befestigungsmittel (5) mit der Zwischenschicht (3), der Außenscheibe (1) und/oder der Innenscheibe (2) verbunden ist und das Befestigungsmittel (5) bevorzugt transparent ist.

4. Verbundscheibe (10) nach einem der Ansprüche 1 bis 3, wobei das Befestigungsmittel (5) ein Klebemittel (11), bevorzugt ein einseitig klebendes Klebeband (12) oder ein doppelseitig klebendes Klebeband (13) ist.

5. Verbundscheibe (10) nach Anspruch 4, wobei das Klebemittel (11) einen Klebstoff, bevorzugt einen Acrylatklebstoff, einen Methylmethacrylatklebstoff, einen Cyanacrylatklebstoff, ein Polyepoxid, einen Silikonklebstoff, und/oder einen Silanvernetzenden-Polymerklebstoff, Gemische und/oder Copolymere davon enthält.

6. Verbundscheibe (10) nach einem der Ansprüche 1 bis 3, wobei das Befestigungsmittel (5) eine Schnur (14), bevorzugt eine transparente Schnur, besonders bevorzugt eine Kunststoffschnur und insbesondere eine Nylonschnur ist.

7. Verbundscheibenanordnung (100), umfassend:
- eine Verbundscheibe (10) nach einem der Ansprüche 1 bis 6 und
- ein Leuchtmittel (20) zur Einkopplung von Licht in die Glasfaser (4).

8. Verbundscheibenanordnung (100) nach Anspruch 7, wobei das Leuchtmittel (20) mindestens eine Laserdiode oder mindestens eine Leuchtdiode enthält.

9. Verfahren zur Herstellung einer Verbundscheibe (10) nach einem der Ansprüche 1 bis 6, mindestens umfassend:
(a) Bereitstellen einer Glasfaser (4), die geeignet ist Licht durch Streuung über ihre Seitenwand entlang ihrer Erstreckungslänge auszusenden und aus mindestens einem Glasfaserkern besteht, der durch eine oder mehrere mantelförmig um den Glasfaserkern angeordnete Schichten, die eine Vielzahl von Streuzentren in Form von Nanoporen oder Nanopartikeln aufweisen, umgeben ist, einer thermoplastischen Zwischenschicht (3), einer Außenscheibe (1) mit einer innenseitigen Oberfläche (II) und einer Innenscheibe (2) mit einer außenseitigen Oberfläche (III),
(b) Anordnen der Glasfaser (4) auf der Zwischenschicht (3), auf der innenseitigen Oberfläche (II) der Außenscheibe (1) oder auf der außenseitigen Oberfläche (III) der Innenscheibe (2),
(c) Anordnen der Zwischenschicht (3) zwischen der Außenscheibe (1) und der Innenscheibe (2),
(d) Verbinden der innenseitigen Oberfläche (II) der Außenscheibe (1) mit der außenseitigen Oberfläche (III) der Innenscheibe (2) über die Zwischenschicht (3) durch Lamination.

10. Verfahren nach Anspruch 9, wobei im Schritt (b) die Glasfaser (4) durch lokales Erwärmen und/oder durch Ausüben eines Druckes in die Oberfläche der Zwischenschicht (3) eingebettet wird.

11. Verfahren nach Anspruch 10, wobei das Erwärmen durch ein Heizelement, bevorzugt einen Lötkolben, eine beheizte Anpresswalze, eine Wärmeplatte, insbesondere ein Bügeleisen, oder einen Heißluftstrom erwärmt wird.

12. Verfahren nach Anspruch 9 oder 10, wobei im Schritt (b) die Glasfaser (4) durch mindestens ein Befestigungsmittel (5) mit der Zwischenschicht (3), der Innenseite (II) der Außenscheibe (1) und/oder der Außenseite (III) der Innenscheibe (2) verbunden wird, bevorzugt durch einen Klebemittel (11) und besonders bevorzugt durch einen flüssigen Klebstoff, durch ein einseitiges Klebeband (12) oder durch ein doppelseitiges Klebeband (13).

13. Verfahren nach Anspruch 9, wobei im Schritt (b) die Glasfaser (4) mit der Zwischenschicht (3) durch mindestens eine Schnur (14) verbunden wird und die Schnur (14) die Glasfaser (4) und die Zwischenschicht (3) durch mindestens zwei Öffnungen (15) schleifenförmig umgreift.

14. Verwendung der Verbundscheibe (10) nach einem der Ansprüche 1 bis 6 oder der Verbundscheibenanordnung (100) nach Anspruch 7 oder 8 in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

## Claims

1. Laminated pane (10), at least comprising:
- an outer pane (1) and an inner pane (2), which are connected to one another via an intermediate layer (3), and
- at least one light-diffusing glass fiber (4), which is suitable for emitting light by diffusion via its side wall along its extension length, and which consists of at least one glass fiber core surrounded by one or more layers that are arranged in the form of a sheath around the glass fiber core and that have a plurality of diffusion centers in the form of nanopores or nanoparticles,
the glass fiber (4) being arranged at least in portions between the intermediate layer (3) and the outer pane (1) and/or between the intermediate layer (3) and the inner pane (2).

2. Laminated pane (10) according to claim 1, wherein the glass fiber (4) is embedded in a surface of the intermediate layer (3).

3. Laminated pane (10) according to either claim 1 or claim 2, wherein the glass fiber (4) is connected by a fastening means (5) to the intermediate layer (3), the outer pane (1) and/or the inner pane (2), and the fastening means (5) is preferably transparent.

4. Laminated pane (10) according to any of claims 1 to 3, wherein the fastening means (5) is an adhering means (11), preferably a single-sided adhesive tape (12) or a double-sided adhesive tape (13).

5. Laminated pane (10) according to claim 4, wherein the adhering means (11) contains an adhesive, preferably an acrylate adhesive, a methyl methacrylate adhesive, a cyanoacrylate adhesive, a polyepoxide, a silicone adhesive, and/or a silane-crosslinking polymer adhesive, mixtures and/or copolymers thereof.

6. Laminated pane (10) according to any of claims 1 to 3, wherein the fastening means (5) is a cord (14), preferably a transparent cord, particularly preferably a plastics material cord, and in particular a nylon cord.

7. Laminated pane assembly (100) comprising:
- a laminated pane (10) according to any of claims 1 to 6, and
- a lighting means (20) for coupling light into the glass fiber (4).

8. Laminated pane assembly (100) according to claim 7, wherein the lighting means (20) contains at least one laser diode or at least one light-emitting diode.

9. Method for producing a laminated pane (10) according to any of claims 1 to 6, at least comprising:
(a) providing a glass fiber (4), which is suitable for emitting light by diffusion via its side wall along its extension length, and which consists of at least one glass fiber core surrounded by one or more layers that are arranged in the form of a sheath around the glass fiber core and that have a plurality of diffusion centers in the form of nanopores or nanoparticles, a thermoplastic intermediate layer (3), an outer pane (1) having an inner surface (II) and an inner pane (2) having an outer surface (III),
(b) arranging the glass fiber (4) on the intermediate layer (3), on the inner surface (II) of the outer pane (1) or on the outer surface (III) of the inner pane (2),
(c) arranging the intermediate layer (3) between the outer pane (1) and the inner pane (2),
(d) connecting the inner surface (II) of the outer pane (1) to the outer surface (III) of the inner pane (2) via the intermediate layer (3) by lamination.

10. Method according to claim 9, wherein in step (b) the glass fiber (4) is embedded in the surface of the intermediate layer (3) by local heating and/or by applying pressure.

11. Method according to claim 10, wherein heating takes place by means of a heating element, preferably a soldering iron, a heated pressure roller, a heat plate, in particular an iron, or a hot air flow.

12. Method according to either claim 9 or claim 10, wherein, in step (b), the glass fiber (4) is connected by at least one fastening means (5) to the intermediate layer (3), the inner side (II) of the outer pane (1) and/or the outer side (III) of the inner pane (2), preferably by an adhering means (11) and particularly preferably by a liquid adhesive, by a single-sided adhesive tape (12) or by a double-sided adhesive tape (13).

13. Method according to claim 9, wherein, in step (b), the glass fiber (4) is connected to the intermediate layer (3) by at least one cord (14), and the cord (14) surrounds the glass fiber (4) and the intermediate layer (3) in a loop-shaped manner through at least two openings (15).

14. Use of the laminated pane (10) according to any of claims 1 to 6 or of the laminated pane assembly (100) according to claim 7 or 8 in means of transport for traffic on land, in the air or in water, in particular in trains, ships and motor vehicles, for example as a windshield, rear window, side window and/or roof window, in buildings, in particular in the entrance area, window area, roof area or facade area, as a built-in part in furniture and devices.

## Revendications

1. Vitrage feuilleté (10), comprenant au moins :
- une vitre externe (1) et une vitre interne (2), lesquelles sont reliées entre elles par l'intermédiaire d'une couche intermédiaire (3), et
- au moins une fibre de verre (4) diffusant la lumière, laquelle fibre de verre est adaptée pour émettre de la lumière par diffusion par l'intermédiaire de sa paroi latérale le long de sa longueur d'extension et est constituée d'au moins un coeur de fibre de verre, lequel est entouré par une ou plusieurs couches en forme de gaine disposées autour du coeur de fibre de verre, lesquelles couches présentent une pluralité de centres de diffusion sous forme de nanopores ou de nanoparticules,
dans lequel la fibre de verre (4) est disposée, au moins dans certaines régions, entre la couche intermédiaire (3) et la vitre externe (1) et/ou entre la couche intermédiaire (3) et la vitre interne (2).

2. Vitrage feuilleté (10) selon la revendication 1, dans lequel la fibre de verre (4) est incorporée dans une surface de la couche intermédiaire (3).

3. Vitrage feuilleté (10) selon la revendication 1 ou 2, dans lequel la fibre de verre (4) est reliée à la couche intermédiaire (3), à la vitre externe (1) et/ou à la vitre interne (2) par un moyen de fixation (5) et le moyen de fixation (5) est de préférence transparent.

4. Vitrage feuilleté (10) selon l'une des revendications 1 à 3, dans lequel le moyen de fixation (5) est un adhésif (11), de préférence un ruban adhésif simple face (12) ou un ruban adhésif double face (13).

5. Vitrage feuilleté (10) selon la revendication 4, dans lequel l'adhésif (11) contient une colle, de préférence une colle acrylate, une colle méthacrylate de méthyle, une colle cyanoacrylate, un polyépoxyde, une colle silicone, et/ou une colle polymère à réticulation au silane, des mélanges et/ou copolymères de ceux-ci.

6. Vitrage feuilleté (10) selon l'une des revendications 1 à 3, dans lequel le moyen de fixation (5) est un cordon (14), de préférence un cordon transparent, de manière particulièrement préférée un cordon en matière plastique et en particulier un cordon en nylon.

7. Agencement de vitrage feuilleté (100), comprenant :
- un vitrage feuilleté (10) selon l'une des revendications 1 à 6 et
- un moyen lumineux (20) pour le couplage de la lumière dans la fibre de verre (4).

8. Agencement de vitrage feuilleté (100) selon la revendication 7, dans lequel le moyen lumineux (20) contient au moins une diode laser ou au moins une diode électroluminescente.

9. Procédé de fabrication d'un vitrage feuilleté (10) selon l'une des revendications 1 à 6, comprenant au moins :
(a) la fourniture d'une fibre de verre (4) qui est adaptée pour émettre de la lumière par diffusion par l'intermédiaire de sa paroi latérale le long de sa longueur d'extension et est constituée d'au moins un coeur de fibre de verre, lequel est entouré par une ou plusieurs couches en forme de gaine disposées autour du coeur de fibre de verre, lesquelles couches présentent une pluralité de centres de diffusion sous forme de nanopores ou de nanoparticules, d'une couche intermédiaire (3) thermoplastique, d'une vitre externe (1) comportant une surface côté interne (II) et d'une vitre interne (2) comportant une surface côté externe (III),
(b) la disposition de la fibre de verre (4) sur la couche intermédiaire (3), sur la surface côté interne (II) de la vitre externe (1) ou sur la surface côté externe (III) de la vitre interne (2),
(c) la disposition de la couche intermédiaire (3) entre la vitre externe (1) et la vitre interne (2),
(d) la liaison par stratification de la surface côté interne (II) de la vitre externe (1) à la surface côté externe (III) de la vitre interne (2) par l'intermédiaire de la couche intermédiaire (3).

10. Procédé selon la revendication 9, dans lequel, à l'étape (b), la fibre de verre (4) est incorporée dans la surface de la couche intermédiaire (3) par chauffage local et/ou par application d'une pression.

11. Procédé selon la revendication 10, dans lequel le chauffage est chauffé par un élément chauffant, de préférence un fer à souder, un rouleau de pressage chauffé, une plaque chauffante, en particulier un fer à repasser, ou un courant d'air chaud.

12. Procédé selon la revendication 9 ou 10, dans lequel, à l'étape (b), la fibre de verre (4) est reliée à la couche intermédiaire (3), au côté interne (II) de la vitre externe (1) et/ou au côté externe (III) de la vitre interne (2) par au moins un moyen de fixation (5), de préférence par un adhésif (11) et de manière particulièrement préférée par une colle liquide, par un ruban adhésif simple face (12) ou par un ruban adhésif double face (13).

13. Procédé selon la revendication 9, dans lequel, à l'étape (b), la fibre de verre (4) est reliée à la couche intermédiaire (3) par au moins un cordon (14) et le cordon (14) entoure la fibre de verre (4) et la couche intermédiaire (3) en forme de boucle par au moins deux ouvertures (15).

14. Utilisation du vitrage feuilleté (10) selon l'une des revendications 1 à 6 ou de l'agencement de vitrage feuilleté (100) selon la revendication 7 ou 8 dans des moyens de déplacement pour la circulation terrestre, aérienne ou maritime, en particulier dans des trains, bateaux et véhicules automobiles, par exemple en tant que pare-brise, lunette arrière, vitre latérale et/ou vitre de toit, dans des bâtiments, en particulier dans la zone d'accès, zone des fenêtres, zone du toit ou zone des façades, en tant qu'élément incorporé dans des meubles et appareils.
